Europäisches Patentamt

European Patent Office

Office européen des brevets

(19)

(11) Publication number: **0 034 859**
**B1**

# EUROPEAN PATENT SPECIFICATION

(45) Date of publication of patent specification: **21.03.84**

(51) Int. Cl.³: **H 04 B 9/00, B 65 G 1/04**

(21) Application number: **81200175.8**

(22) Date of filing: **13.02.81**

(54) **Infra-red data transmission system.**

(30) Priority: **13.02.80 NL 8000904**

(43) Date of publication of application:
**02.09.81 Bulletin 81/35**

(45) Publication of the grant of the patent:
**21.03.84 Bulletin 84/12**

(84) Designated Contracting States:
**CH DE FR GB IT LI NL**

(56) References cited:
**DE - A - 2 559 646**
**FR - A - 2 189 954**
**GB - A - 413 323**
**NL - A - 7 908 571**

**POLYTECHNISCH TIJDSCHRIFT-**
**ELEKTROTECHNIEK-ELEKTRONICA, vol. 35,**
**January 1980, Nr. 1, Den Haag, NL "Lokale**
**Datatransmissie via infrarode straling", page 24**
**PROCEEDINGS OF THE IEEE, vol. 67, November**
**1979, no. 11, New York, USA F.R. GFELLER and**
**U. BAPST: "Wireless in-house data**
**communication via difuse infrared radiation",**
**pages 1474–1486**

(73) Proprietor: **EUROPE CONTAINER TERMINUS B.V.**
**Seattleweg 7 P.O. Box 7400**
**NL-3000 HK Rotterdam (NL)**

(72) Inventor: **Latour, Pieter Lauweren**
**Milletstraat 45**
**NL-1077 ZC Amsterdam (NL)**

(74) Representative: **van der Beek, George Frans et al,**
**Nederlandsch Octrooibureau Johan de Wittlaan**
**15 P.O. Box 29720**
**NL-2502 LS Den Haag (NL)**

Infra-red data transmission system

The invention relates to an infra-red transmission system, in which messages in the form of pulse coded data signals are transmitted between transmitting-receiving units, each being provided with at least one infra-red light emitting element and an infra-red light sensitive photo-element, the messages transmission being applied for the control of movements of carriers to be used for the transport of goods, along movements paths in an area, for which purpose such a transmitting-receiving unit is installed in each carrier and at least one of such a transmitting-receiving unit is installed in said area. Such an infra-red transmission system is known from the US patent application Serial No. 969.798 of December 15, 1978, (U.S.—A—4236255 published 25/11/80 and the equivalent NL—A—7908571 published 17/6/80).

The infra-red transmission system described in above mentioned patent application, is used for the transport of goods in a warehouse, in which a transport carrier moveable between the storage scaffolds is provided with a platform which can be adjusted in height along a mast structure. A carriage may be moved from this platform via fixed rails mounted at several heights between the storage scaffolds in order to fetch goods or deposit the same. An infra-red transmitting-receiving unit is mounted on said carriage and another is mounted on said platform, which units are aligned straight opposite each other in accordance with a fixed optical path. The described system can only be used in a warehouse, which in all corridors between the storage scaffolds is provided with a complicated rail scaffold structure, across which the carriages have to be moved according to fixed paths. The invention has in view to obviate this problem and to furnish an infra-red transmission system applicable in open space, in which freely controllable carriers are driven by drivers along movement paths in order to displace goods, such as for example containers.

This is realized with an infra-red transmission system of the type indicated in the preamble according to the invention such, that each transmitting-receiving unit including the infra-red light emitting element(s) and the infrared light sensitive photo-element(s) is taken up in a house having such a formed common outlet- and inlet opening for the infra-red light, that a directed transmitting- and receiving beam is obtained, that a plurality of transmitting-receiving units is installed on fixed locations along the movement paths and one transmitting-receiving unit is installed on each carrier with such an alignment of the transmitting-receiving beams, that when a carrier passes said locations the relevant transmitting-receiving beams sweep across each other during which the message transmission takes place, a data input and display unit, connected to the associated transmitting-receiving unit, being installed in each carrier in aid of the driver, which carrier is freely controllable in direction and speed. With this system according to the invention also the advantage is obtained that the infra-red based message signals are able to penetrate through dense mist and snow without appreciable loss of power.

A further advantageous embodiment of the invention is characterized in that the plurality of fixed transmitting-receiving units is installed in the road surface of the movement paths, the associated transmitting-receiving beams being directed upwards, and that each carrier is provided with a horizontal supporting arm to which said one transmitting-receiving unit is fastened, the associated transmitting-receiving beam being directed downwards.

A further advantageous embodiment of the invention is characterized in that the transmission speed of the message signals, the radius of the transmitting-receiving beam of the transmitting-receiving units and the speed of the carriers are matched such to each other, that a complete message exchange between the transmitting-receiving unit of the carrier and the one in the road surface is guaranteed during a usual displacement·of the carrier. Because use is made of the feature of light emitting elements, that they can be switched in and out extremely fast and that the light sensitive photo-elements also are able to follow this fast switching in the same rate, data can be transmitted in a very fast and also reliable manner by coding said data in a certain way. The high reliability hereby is realized by means of redundancy and control such that each character comprising a plurality of bits is followed by the same plurality of bits in complementary form, and that each message comprising a plurality of characters is closed by a parity control character.

The said transmission speed may amount to 100.000 bit/sec. The radius of the transmitting-receiving beam of each transmitting-receiving unit may amount to three to five meter. Instructions for the movement of carriers, the reception or delivery of goods, such as containers, are carried out with the aid of above mentioned system in a throughput of storage area. The drivers on said carriers may read the instructions, may execute and subsequently may indicate by means of a keyboard on the input and display unit that one and another has been carried out.

Not only a wireless and interference free transmission of message signals is obtained in this manner, in which a message is transmitted very fast, for example 20 milli-second per instruction, but also a more effective use of the carriers is possible by immediate serial instructions and a visual control on the delivery areas.

The present invention will now be elucidated further on the basis of an embodiment with reference to the annexed drawings, in which:

Figure 1 shows a basic sketch of an embodiment of such a system used for the control of movements of goods;

Figures 2a and 2b respectively give an example of the coding of a character in an infra-red message and of the applied timing gates used at the reception of an infra-red message in the receiver;

Figure 3 shows a diagram of the transmitter in a transmitting-receiving unit;

Figure 4 shows a diagram of the receiver in a transmitting-receiving unit; and

Figure 5 shows a diagram of the control circuit in a transmitting-receiving unit.

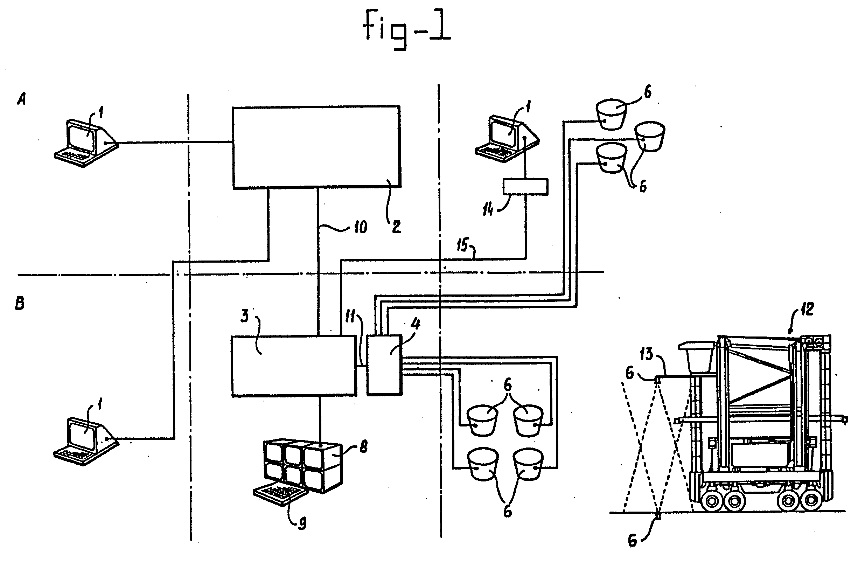

An outline of the system with the applied equipment and the connections of the system are indicated in Figure 1. An input and display unit 1 is connected to the central control unit or computer 2, in which input and display unit the starting data may be inputted. The central computer 2 is connected to the minicomputer 3 of the infra-red transmission system via a modem connection 10. A first micro- or field computer 4 is connected to this minicomputer, which field computer 4 is connected to a plurality of transmitting-receiving units or so called pots positioned in the ground. A plurality of display units 8 having an input unit 9 is also connected to the minicomputer 3 for the sake of the traffic controller. The minicomputer 3 is also connected to a second micro or field computer 14 via another modem connection 15, which field computer 14 is connected to an input and display unit 1.

For the transmission of the pulse coded infra-red messages use is made of the pulse code from the ASCII-schedule. As an example one could take the character E, which in accordance with this schedule equals binary

45 or 0100 0101.
    4     5

For the transmission in the infra-red message on the first place of these eight characters always a one will be used, while after these eight characters the complementary pattern of it will follow.

| | | |
|---|---|---|
| So the E becomes | : | 01000101 |
| adding the 1 to it | : | 11000101 |
| finally | : | 1100010100111010 |

So each character is presented by a string of 16 possible binary marks, in which always a one will be at the head and in which the second portion (second eight marks) presents the inverse of the first portion. The infra-red transmitter operates with a precision crystal clock of 1 MHz, from which a signal of 100.000 Herz is derived.

That means that each 10 $\mu$sec a binary 1 or 0 is transmitted. The letter E in the infra-red message is displayed in Figure 2a.

It is a characterizing feature that at any moment there are always eight infra-red pulses. If for one reason or another a pulse drops out, as the beam is interrupted for a moment or a pulse is introduced by lightning or for another reason, then the system will reject the string. It is possible but not probable that one pulse drops out while another pulse is introduced in the corresponding place in the other eight marks. In this case this string would be accepted. Then, however, a second protection is still relevant.

For each message consists of 39 characters of data followed by a control character or check digit. Each real communication therefor is realized by transmitting a string of 40 characters.

This is illustrated on the basis of a somewhat shorter string of 5 characters, for example A.E.F.3.1. In the ASCII-schedule this is: 41, 45, 46, 33, 31.

Binary this will become:

| | | |
|---|---|---|
| 41 | 0100 | 0001 |
| 45 | 0100 | 0101 |
| 46 | 0100 | 0110 |
| 33 | 0011 | 0011 |
| 31 | 0011 | 0001 |
| Parity | 0100 | 0000 |

An even number of ones will occur in all columns, and also the last character will be transmitted.

The receiver builds up the parity during the reception of the string of 39 characters and compares its result with the last (fortieth) character. The information is approved only when all characters per se are correct and the control character matches. The chance for a mistake therefore in fact is equal to zero.

The price which is paid for this safeguard in the system is a very slight degree of the speed otherwise obtained. Now sixteen pulses instead of seven pulses per character and also an additional control character following the first 39 characters are transmitted per message.

The receiver is started by the first pulse which enters. A possible following pulse is admitted in a timing gate lasting from 8 to 13 $\mu$sec, the following pulse being admitted in a timing gate lasting from 18 to 23 $\mu$sec, etc., such that spurious pulses or transients outside these gates will not be admitted in the system.

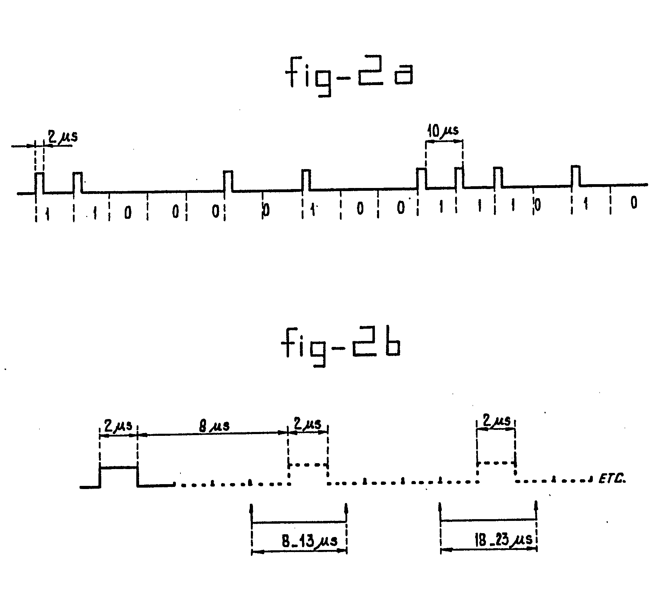

One and another is indicated in Figure 2b.

The time duration for the transmission of one character is $16 \times 10$ $\mu$sec$=160$ $\mu$sec. A rest period of 100 $\mu$sec is used for allowing the receiver to start anew, to judge the received character and to process it. Then the next character follows. Therefore a period of $(160+100)$ $\mu$sec$=260$ $\mu$sec per character is required.

The whole communication duration for a sequence of 40 characters therefore equals $40 \times 260$ $\mu$sec=10.400 $\mu$sec=10.4 msec. The receiver looks for the answer after receipt of the string. This search takes an average of 4 msec, but in the maximum case may amount to 14 msec. Subsequently an answer is retransmitted consisting anew of 40 characters.

The total communication duration therefore amounts to a maximum of 35 msec or about

$$\frac{1}{30} \text{sec.}$$

The vehicle or straddle carrier having a speed of 36 km/hour covers a distance of

$$\frac{36.000}{3600} \times \frac{1}{30} = 33$$

centimeter during 1/30 second. A sufficient guarantee is obtained for a complete message exchange between the transmitting-receiving unit of the carrier and the unit in the ground during the movement of said carrier because the active beam radius of a transmitting-receiving unit equals three to five meter.

The incoming or reception information and the delivery or gate information in the system indicated in Figure 1, is relayed to the central computer. The reception information serves to deposit the goods or containers from the incoming ship, train or vehicle in a certain buffer or storage area. The delivery or gate information serves to control the delivery of the ready goods to the vehicle, train or ship.

The minicomputer 3 connected to the central computer 2, controls the whole data traffic, for which it comprises the whole data storage. The first field computer 4 has to provide for the infra-red communication between the ground positioned transmitting-receiving units 6 or pots and a carrier based transmitting-receiving unit 6. The second field computer 14 provides for the correct delivery of the goods to the transport means at the gate of the transport area, such as vehicles or trains.

Next a possible procedure for the transport of the goods will be explained in a simple manner. With the aid of a report in the reception space A which report is inputted via the input unit 1 to the central computer 2, it is indicated to the system which good or container has to be fetched. This information is transmitted right away by the central computer to the minicomputer 3 and subsequently is displayed on one of the video screens 8 associated with this minicomputer 3. With the aid of a keyboard 9 coupled to these screens the traffic controller gives his instructions. In this field phase it holds that the present location (for a container for example which has just arrived) and the future location (intermediate or final storage) should be known. As soon as this information has been inputted by the traffic controller, this container having a certain sequence number will be relayed by a minicomputer 3 to the first field computer 4. This transmission between the minicomputer 3 and the field computer 4 occurs for example with the aid a parallel connection 11 having a speed of 30 $\mu$sec per bit, such that the transmission of 64 bytes only takes about 2 msec. This duration deliberately is held as short as that such that other connections will not experience any delay or interruption.

The first field computer 4 relays the message to a buffer belonging to a ground pot. From here this message subsequently is transmitted via the infra-red transmission system to the carrier as said carrier passes over a transmitting-receiving unit 6 or pot. The field computer 4 then also receives back the data from the finished last instructions which was inputted by the driver of the carrier or vehicle to his input and display unit 1. This data then is transmitted from the field computer 4 to the minicomputer 3.

A straddle carrier 12 is indicated in the right part of Figure 1, which carriers has a transmitting-receiving unit 6 mounted onto a horizontal arm 13. The transmitting-receiving beam of said unit 6 is directed downwards and thereby may sweep across the upwards directed transmitting-receiving beam of a surface road based transmitting-receiving unit 6 as said carrier passes said unit.

The whole procedure is followed on the video screen of the minicomputer on the basis of the status which is continuously updated. After the container has been transported by the straddle carrier from the terminal check in point to the intermediate storage, the driver will feed in the number of the location of the intermediate storage, whereupon this data will be relayed to the minicomputer as the carrier passes a ground pot. The driver at that moment may also receive a new instruction via his display unit. The traffic controller fills in the new location on a card, after which the relevant container sequence number will be read into the memory, and will disappear from the screen.

The next report to the central computer 2 occurs during the passage of the collector through the gate B, for example a vehicle or train. The sleeping container now arrives with a new status on the screen of the input and display unit of the second field computer 14 at the gate. When the collector reports at this gate, the sequence number of the container will be inputted, which data is relayed to the minicomputer 3 via the modem connection 15. The status of the container is increased on one of the screens of the minicomputer, and the next free carrier obtains its instructions for transporting this container from the intermediate storage to the storage area or block near the gate. The status is increased after the instruction has been taken by the driver, and the status of the relevant container is again increased when the instructions are carried out and a possible succeeding instruction is accepted. Finally the traffic controller feeds in the container sequence number having a pre-fix together with a block number when the container is delivered to the collector. The final status is given when this information fits in and the container may be delivered.

The priority of the container is respected during this whole procedure and a container having a high priority may obtain precedence above a container having a lower priority even if the former has been reported later.

All transmitting-receiving units 6 or pots in the ground will first be started when there are instructions which have to be transmitted to the carriers. These units then will await the data from the first field computer 4 or from the passing vehicles. A general interrupt will be generated for the first field computer 4 when for example a first infra-red pulse from a carrier is relayed to a certain transmitting-receiving unit 6 in the ground. Said field computer 4 now searches with the aid of a scanning routine from which transmitting-receiving unit 6 the interruption came and subsequently the data will be processed. Said associated ground pot furthermore will be used for receiving more data and also for retransmitting an answer.

It is possible to deal with a large number of carriers simultaneously without loss of any information because all transmitting-receiving units 6 dispose of their respective own memory capacity. The memory capacity does not need to be large in view of the short communication duration of about $100 \times 260$ $\mu$sec=26 msec. The maximum waiting time for the last carrier amounts to about 0.3 seconds even in the case when ten carriers simultaneously would pass ten different transmitting-receiving units 6 in the ground. In this time period a carrier will drive for one and a half meter at a speed of 18 km/hour, while the diameter of the beam amounts to 5 meter.

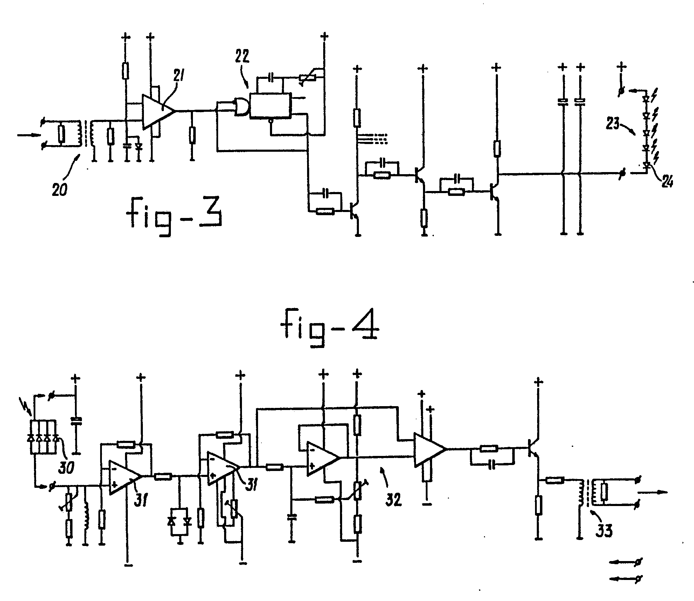

Next the transmitter and receiver of each transmitting-receiving unit 6 will be explained on the basis of Figures 3 and 4.

The transmitter indicated in Figure 3 is connected via a special transformer 20 to a line, which is coupled to the field computer 4 or to the associated input and display unit of the driver of the vehicle. The length of the line has been tested up to 800 meter, the received signal amply meeting the requirements. A pulse start circuit 21 is taken up behind the input transformer, which circuit controls a succeeding one-shot circuit 22 of 2 $\mu$sec. This pulse of 2 $\mu$sec is amplified with the aid of some succeeding transistor stages, whereupon the amplified pulse signal is applied to four branches 23 each consisting of five transmitting diodes 24. A current of 2 amp. flows in each branch. The peak power in total hereby amounts to about 80 watt. This means a radiated infra-red power of 5.6 watt at a yield of about 7%.

The receiver indicated in Figure 4 has at its input a parallel circuit of four photo sensitive diodes 30 having a self inductance which is aperiodically damped. The signal subsequently is amplified by two limiting amplifiers 31, is formed in a trigger circuit 32 and is relayed via a transformer 33 over the line.

Apart from the transmitter and receiver mounted on one card, also a control circuit mounted on another card is included in each transmitting-receiving unit.

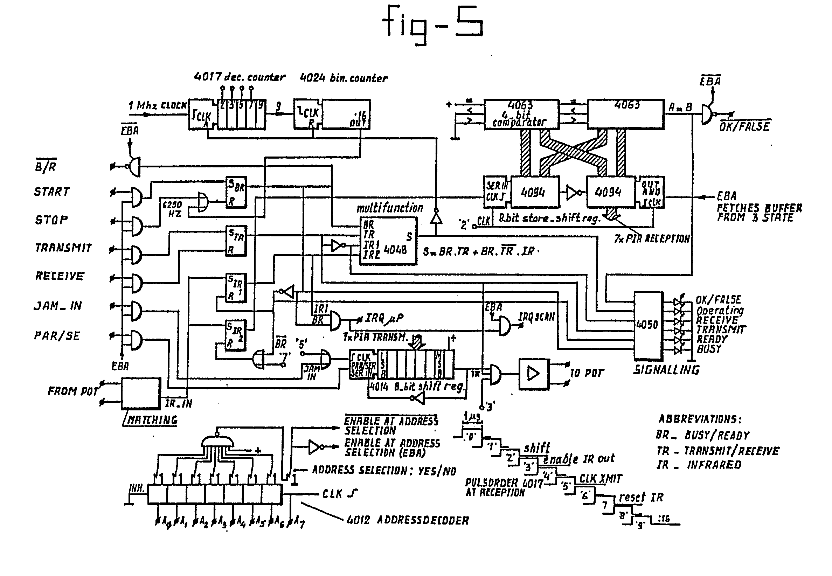

This control circuit indicated in Figure 5 provides for the generation and detection of the said infra-red pulse patterns. Said card is provided with seven address switches as each card is destined to be used for a large number of transmitting-receiving units which each have to maintain their own identity. The pot address is set with the aid of said address switches in accordance with the normal binary code.

The address code may be switched out with the aid of an additional switch such that the transmitting-receiving unit may also operate in system without address selection.

When a character has to be transmitted, it will be relayed from the microprocessor in a 8-bit format via the parallel interface. The 16-bit pattern discussed in the preceding is generated with the aid of a 8-bit shift register 4014 having an inverted feedback loop. The synchronisation is provided for by several logic circuits such as indicated in Figure 5. When an 16-bit pattern is presented via the receiver, it will be applied after synchronisation of the circuits in two 8-bit shift registers 4094. These two shift registers are mutually coupled via an inverter. The received character already will then be in the second shift register. The two four-bit comparators 4063 check the received bit sequence on transmission errors. The received characters will be presented via the 8-bit parallel interface to the microprocessor when there are no errors found. The essential control signals will be made visible via the signalling unit 4050 in order to be able to check the correct operation of the control electronics.

It is obvious that many modifications and additions may be realized in the above mentioned system without leaving the frame work of the invention.

The infra-red message exchange in the described system is based on an essentially vertical directed connection between two transmitting-receiving units, the mutual distance of which may amount to 13 meter. The system, however, can be used as well for an essentially horizontal directed connection for the control of the movements of cranes, whereby the mutual distance between the transmitting-receiving units may amount to for example 135 meter.

**Claims**

1. An infra-red transmission system in which messages in the form of pulse coded data signals are transmitted between transmitting-receiving units (6) each being provided with at least one infra-red light emitting element and one infra-red light sensitive photo-element, the message transmission being used for the control of carrier movements destined for the transport of goods along movements paths in an area, for which purpose on each carrier (12) such a transmitting-receiving unit and in said area at least one such a transmitting-receiving unit is installed, wherein each transmitting-receiving unit having the infra-red light emitting element(s) and the infra-red light sensitive photo-element(s) is taken up in a house having such a formed, common outlet and inlet opening for the infra-red light, that a directed transmitting and receiving beam is obtained, wherein a plurality of transmitting-receiving units is mounted on fixed locations along the movement paths and a said one transmitting-receiving unit is mounted on each carrier all having such an alignment of the transmitting-receiving beams that when a carrier passes said locations and relevant transmitting-receiving beams sweep across each other during which the message transmission takes place, and wherein in each carrier, which is freely controllable in direction and speed, a data input- and display unit, connected to the associated transmitting-receiving unit, is mounted in aid of the driver.

2. An infra-red transmission system according to claim 1, characterized in that the plurality of fixedly mounted transmitting-receiving units is installed in the road surface of the movement paths, the associated transmitting-receiving beams being directed upwards, and that each carrier is provided with a horizontal support arm (13) to which said one transmitting-receiving unit is fastened having its transmitting-receiving beam directed downwards.

3. An infra-red transmission system according to claim 2, characterized in that the transmission speed of the message signals, the radius of the transmitting-receiving beam of the transmitting-receiving units, and the speed of the carriers are matched such to each other that a complete message exchange between the transmitting-receiving unit of the carrier and the surface road based transmitting-receiving unit is guaranteed during a usual movement of the carrier.

4. An infra-red transmission system according to claim 3, characterized in that the transmission speed, the radius of the transmitting-receiving beam, the speed of the carrier respectively to 100.000 bit/sec, 3—5 meter and 18—36 km/hour.

5. An infra-red transmission system according to any one of the preceding claims to be used in a storage and throughput area for the movement of containers and such goods by means of freely controllable transport carriers, the drivers of which receive, carry out and report movement instructions via the infra-red transmission system.

## Patentansprüche

1. Infrarot-Übertragungssystem für den Nachrichtenaustausch in Form von pulscodierten Datensignalen zwischen Sende-Empfangseinheiten (6), wobei jede Sende-Empfangseinheit mit wenigstens einem Infrarotlicht abgebenden Element und einem für Infrarotlicht empfindlichen Fotoelement ausgestattet ist und die Nachrichtenübertragung für die Steuerung eines Transportmittels für Waren über Wege in einem bestimmten Bereich bestimmt ist, indem auf jedem Transportmittel (12) solch eine Sende-Empfangseinheit und in dem genannten Bereich wenigstens eine solche Sende-Empfangseinheit installiert ist, wobei jede Sende-Empfangseinheit, die ein oder mehrere Infrarotlicht abgebende Elemente und ein oder mehrere für Infrarotlicht empfindliche Fotoelemente aufweist, in einem Gehäuse mit einer derart geformten gemeinsamen Aus- und Eingangsöffnung für das Infrarotlicht untergebracht ist, daß ein gerichteter Sende- und Empfangsstrahlt erhalten wird, wobei eine Vielzahl von Sende-Empfangseinheiten an bestimmten Stellen entlang der Transportwege angeordnet ist und eine dieser Sende-Empfangseinheiten auf jedem Transportmittel angebracht ist, wobei alle Sende-Empfangseinheiten derart ausgerichtete Sendestrahlen haben, daß, wenn ein Transportmittel bestimmte Stellen passiert, sich die betreffenden Sende-Empfangsstrahlen miteinander kreuzen, wenn die Nachrichtenübertragung statttindet, und wobei in jedem in Richtung und Geschwindigkeit frei steuerbaren Transportmittel eine mit der zugehörigen Sende-Empfangseinheit verbundene Dateneingangs- und Anzeigeeinheit zur Unterstützung eines Fahrers montiert ist.

2. Infrarot-Übertragungssystem nach Anspruch 1, dadurch gekennzeichnet, daß die Mehrzal von festmontierten Sende-Empfangseinheiten in der Straßenoberfläche des Transportweges installiert ist, die zugehörigen Sende-Empfangsstrahlen aufwärts gerichtet sind und daß jedes Transportmittel mit einem horizontalen Versorgungsarm (13) ausgestattet ist, an dem eine Sende-Empfangseinheit befestigt ist, die ihren Sende-Empfangsstrahl nach unten gerichtet hat.

3. Infrarot-Übertragungssystem nach Anspruch 2, dadurch gekennzeichnet, daß die Übertragungsgeschwindigkeit der Nachrichtensignale, der Radius des Sende-Empfangsstrahles der Sende-Empfangseinheit und die Geschwindigkeit der Transportmittel so aufeinander abgestimmt sind, daß ein vollkommener Nachrichtenaustausch zwischen Sende-Empfangseinheit des Transportmittels und der in der Straßenoberfläche befindlichen Sende-Empfangseinheit bei einer gebräuchlichen Bewegung des Transportmittels garantiert ist.

4. Infrarot-Übertragungssystem nach Anspruch 2, dadurch gekennzeichnet, daß die Übertragungsgeschwindigkeit, der Radius des Sende-Empfangsstrahles und die Geschwindigkeit des Transportmittels 100.000 bits/s, bzw. 3—5 m, bzw. 18—36 km/h betragen.

5. Infrarot-Übertragungssystem nach einem der Ansprüche 1 bis 4 zum Gebrauch in einem Lager und Durchgangsbereich für die Bewegung von Behältern und ähnlichen Waren mit Hilfe von frei steuerbaren Transportmitteln, deren Fahrer Instruktionen für die auszuführende Bewegung und deren Ausführung über das Infrarot-Übertragungssystem empfängt.

**Revendications**

1. Système de transmission par infrarouge dans lequel des messages, sous la forme de signaux d'information codés par impulsions, sont transmis entre des postes (6) émetteurs-récepteurs, chacun de ces postes étant pourvu d'au moins un élément émetteur de lumière infrarouge et d'un élément photosensible à la lumière infrarouge, la transmission des messages étant appliquée à la commande des déplacements d'un transporteur destiné au transport de marchandises suivant des parcours de déplacement dans une zone, but pour lequel un tel poste émetteur-récepteur unique est installé sur chaque transporteur (12) et au moins un tel poste émetteur-récepteur est installé dans ladite zone, caractérisé par le fait que chaque poste émetteur-récepteur comportant le ou les éléments émetteurs de lumière infrarouge et le ou les éléments photosensibles à la lumière infrarouge est reçu dans un carter comportant un orifice commun de sortie et d'entrée de la lumière infrarouge conformé de façon que soient obtenus respectivement des faisceaux d'émission et de réception dirigés, que plusieurs postes émetteurs-récepteurs sont montés dans des emplacements fixes le long des parcours de déplacement, et qu'un poste émetteur-récepteur unique est monté sur chaque transporteur, tous lesdits postes présentant un alignement des faisceaux d'émission et de réception tel que lorsqu'un transporteur passe par lesdits emplacements, les faisceaux d'émission et de réception correspondants effectuent mutellement un balage croisé pendant lequel la transmission du message se produit, et que dans chaque transporteur pouvant être commandé librement en direction et en vitesse, est monté un poste d'entrée et d'affichage d'informations, connecté au poste émetteur-récepteur associé, pour assister le conducteur.

2. Système de transmission par infrarouge selon la revendication 1, caractérisé par le fait que la série des postes émetteurs-récepteurs montés fixement est installée dans la surface du chemin des parcours de déplacement, les faisceaux d'émission et de réception associés étant dirigés vers le haut, et que chaque transporteur est pourvu d'un bras (13) de support horizontal auquel est fixé ledit poste émetteur-récepteur unique dont le faisceau respectif de transmission et de réception est dirigé vers le bas.

3. Système de transmission par infrarouge selon la revendication 2, caractérisé par le fait que la vitesse de transmission des signaux de message, le rayon des faisceaux d'émission et de réception des postes émetteurs-récepteurs et la vitesse des transporteurs sont assortis les uns aux autres de façon qu'un échange de message complet entre le poste émetteur-récepteur du transporteur et le poste émetteur-récepteur logé en surface du chemin soit assuré pendant un déplacement courant du transporteur.

4. Système de transmission par infrarouge selon la revendication 3, caractérisé par le fait que la vitesse de transmission, le rayon des faisceaux d'émission et de réception et la vitesse du transporteur s'élèvent respectivement à 100.000 bits/seconde, 3—5 mètres et 18—36 kh/heure.

5. Système de transmission par infrarouge selon l'une quelconque des revendications précédentes, destiné à être utilisé dans une zone d'entreposage et de débit pour le déplacement de conteneurs et desdites marchandises au moyen de véhicules de transport pouvant être librement commandés et dont les conducteurs reçoivent, effectuent et rapportent les instructions de déplacement par l'intermédiaire dudit système de transmission par infrarouge.

Fig-1

A

B

0 034 859

# fig-2a

2 µs

10 µs

1 1 0 0 0 0 1 0 0 1 1 1 0 1 0

# fig-2b

2 µs          8 µs          2 µs                    2 µs

ETC.

8..13 µs                    18..23 µs

0 034 859

fig-3

fig-4

fig-5